# EUROPEAN PATENT SPECIFICATION

(11) **EP 3 327 304 B1**
(45) Date of publication and mention of the grant of the patent: **13.11.2019**
(21) Application number: 17201355.9
(22) Date of filing: 13.11.2017
(51) Int. Cl.: F16D 3/06, F16D 3/84, F16J 3/04

(54) **VARIABLE STIFFNESS JOINT ASSEMBLY HAVING A BUSHING ASSEMBLY**
GELENKANORDNUNG MIT VARIABLER STEIFIGKEIT MIT EINER BUCHSENANORDNUNG
ENSEMBLE DE JOINT À RIGIDITÉ VARIABLE COMPORTANT UN ENSEMBLE DE DOUILLE

(30) Priority: 15.11.2016 US 201615351518
(43) Date of publication of application: 30.05.2018
(73) Proprietor: Steering Solutions IP Holding Corporation, Saginaw, MI 48601 (US)
(72) Inventor: Kleinfeld, Brian J., Saginaw, MI 48602 (US); Courville, Jeffrey P., Frankenmuth, MI 48734 (US); Miller, Jon N., Merrill, MI 48637 (US)
(74) Representative: Manitz Finsterwald Patent- und Rechtsanwaltspartnerschaft mbB

(56) References cited:
- DE-U1- 20 121 652
- US-A1- 2007 026 953
- US-A1- 2007 042 827
- US-A1- 2011 059 803

## Description

### BACKGROUND OF THE INVENTION

A sealing assembly may be provided about a portion of a constant velocity joint to seal lubricant within the constant velocity joint and to exclude foreign objects from entering the constant velocity joint. The sealing assembly may include a first convoluted seal that permits angular and axial displacement of the constant velocity joint and a bushing permits rotational movement of the parts.

A variable stiffness joint assembly having a bushing assembly according to the preamble of claim 1 is known from DE 201 21 652 U1. Further prior art is disclosed in US 2007/026953 A1, US2007/042827 A1 and US 2011/059803 A1.

### SUMMARY OF THE INVENTION

It is an object of the invention to provide a more robust variable stiffness joint assembly which is resistant to compressive forces. The object is satisfied by the subject matter of claim 1.

In addition to one or more of the features described herein, the first inner surface defines a plurality of first engagement elements and the second outer surface defines a plurality of second engagement elements that are arranged to selectively engage the plurality of first engagement elements.

In addition to one or more of the features described herein, a sealing boot having a first boot end is operatively connected to the bushing assembly and a second boot end operatively connected to the constant velocity joint assembly

In addition to one or more of the features described herein, a clamp is disposed about the first boot end and is arranged to secure the sealing boot to the bushing assembly.

In addition to one or more of the features described herein, the first cavity is radially offset from the second cavity.

In addition to one or more of the features described herein, the first cavity is aligned with the second cavity radially along another axis that is disposed about a bushing axis of the bushing body.

In addition to one or more of the features described herein, at least one of the first cavity and the second cavity is filled with a fluid.

According to another embodiment of the present disclosure, which is not part of the invention, a bushing assembly for a variable stiffness joint assembly is provided. The bushing assembly includes a bushing body and a boot stop. The bushing body is disposed about a shaft assembly. The bushing body has an inner bushing surface, an outer bushing surface that is spaced apart from the inner bushing surface, a first bushing face that extends between a first end of the inner bushing surface and a first end of the outer bushing surface, and a second bushing face that extends between a second end of the inner bushing surface and a second end the outer bushing surface. The boot stop extends from the bushing body.

In addition to one or more of the features described herein, the bushing body defines a first cavity that extends from the first bushing face towards the second bushing face.

In addition to one or more of the features described herein, the bushing body is made of a composite material having a non-linear stiffness characteristic.

In addition to one or more of the features described herein, the boot stop extends from and is disposed perpendicular to the outer bushing surface.

In addition to one or more of the features described herein, the inner bushing surface defines a first protrusion that extends towards the shaft assembly.

In addition to one or more of the features described herein, the outer bushing surface defines a second protrusion that engages a sealing boot that is at least partially disposed over the outer bushing surface.

In addition to one or more of the features described herein, the boot stop is configured to engage an end of the sealing boot.

According to yet another embodiment of the present disclosure, which is not part of the invention, a bushing assembly for a variable stiffness joint assembly is provided. The bushing assembly includes a first bushing member and a second bushing member. The first bushing member has a first inner surface that is configured to engage an outer surface of a shaft assembly and a first outer surface spaced apart from the first inner surface. Each of the first inner surface and the first outer surface extends between a first bushing member first end and a first bushing member second end. The second bushing member has a second inner surface that is configured to engage the first outer surface and a second outer surface that is configured to engage a sealing boot. Each of the second inner surface and the second outer surface extends between a second bushing member first end and a second bushing member second end. The first bushing member is rotatable relative to the second bushing member.

In addition to one or more of the features described herein, the first inner surface defines a first protrusion that is configured to engage the outer surface of the shaft assembly.

In addition to one or more of the features described herein, the first outer surface defines a first retention arm disposed proximate the first bushing member first end and a second retention arm disposed proximate the first bushing member second end.

In addition to one or more of the features described herein, the second bushing member is disposed between the first retention arm and the second retention arm.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial cross-sectional view of a variable stiffness joint assembly;
FIG. 2 is a partial cross sectional view of the variable stiffness joint assembly along section line 2-2;
FIG. 3 is a plan view of a bushing assembly provided with the variable stiffness joint assembly;
FIG. 4 is a cross-sectional view of the bushing assembly of FIG. 3;
FIG. 5 is a plan view of a bushing assembly;
FIG. 6 is a cross-sectional view of the bushing assembly of FIG. 5;
FIG. 7 is another cross-sectional view of the bushing assembly of FIG. 5;
FIG. 8 is a plan view of a bushing assembly;
FIG. 9 is a cross-sectional view of the bushing assembly of FIG. 8;
FIG. 10 is a plan view of a bushing assembly;
FIG. 11 is a cross-sectional view of the bushing assembly of FIG. 10;
FIG. 12 is a plan view of a bushing assembly, which is not part of the present invention; and
FIG. 13 is a cross-sectional view of the bushing assembly of FIG. 12.

### DETAILED DESCRIPTION

Referring now to the Figures, where the invention will be described with reference to specific embodiments, without limiting same, it is to be understood that the disclosed embodiments are merely illustrative of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

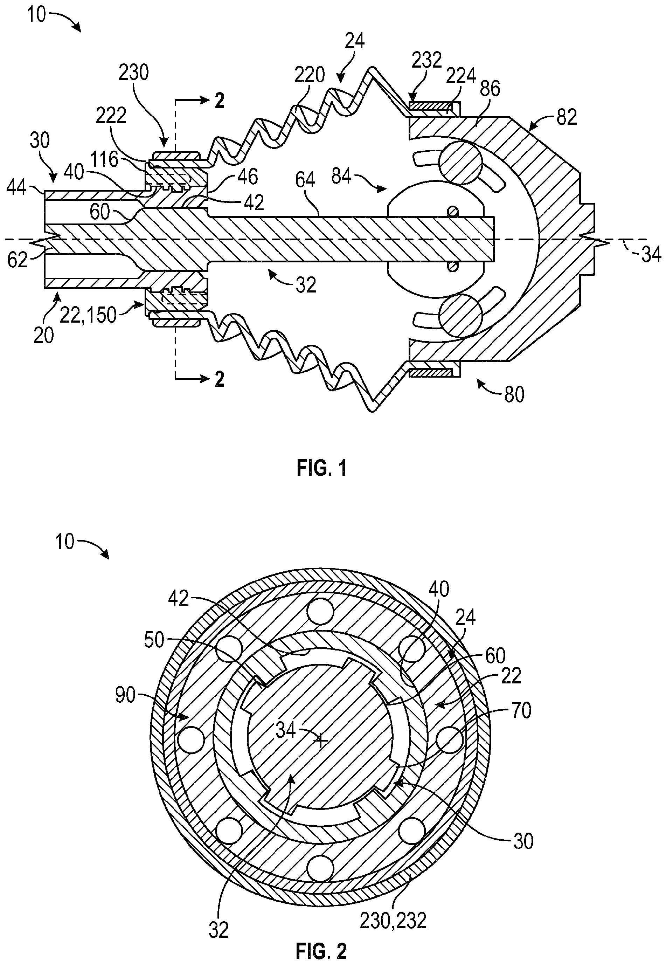

Referring to FIGS. 1 and 2, a variable stiffness joint assembly 10 is shown. The variable stiffness joint assembly 10 includes a shaft assembly 20, a bushing assembly 22, and a sealing boot 24.

The shaft assembly 20 is a torque transmitting shaft assembly that is used to transmit torque or power from a driving source, such as a transmission or transaxle, to a driven component, such as a vehicle wheel. The shaft assembly 20 includes a first member 30 and the second member 32.

The first member 30 extends along an axis 34. The first member 30 has a first outer surface 40 and a first inner surface 42 that is disposed opposite the first outer surface 40. The first outer surface 40 and the first inner surface 42 each extend between a first member first end 44 and the first member second end 46.

The first inner surface 42 defines an inner bore of the first member 30. The first inner surface 42 defines a plurality of first engagement elements 50. The plurality of first engagement elements 50 are disposed proximate the first member second end 46. The plurality of first engagement elements 50 are configured as a plurality of torque receiving grooves, torque receiving serrations, torque receiving protrusions, gear teeth, projections, or the like.

The second member 32 extends along the axis 34. The second member 32 is at least partially received within the inner bore of the first member 30. The second member 32 has a second outer surface 60 that extends between a second member first end 62 and a second member second end 64.

The second outer surface 60 defines a plurality of second engagement elements 70. The plurality of second engagement elements 70 are arranged to selectively engage the plurality of first engagement elements 50. The plurality of second engagement elements 70 are configured as a plurality of torque transmitting grooves, torque transmitting serrations, torque transmitting protrusions, gear teeth, projections, or the like. Each element of the plurality of second engagement elements 70 is received within or disposed between corresponding engagement elements of the plurality of first engagement elements 50. Engagement between and elements of the plurality of first engagement elements 50 and an element of the plurality of second engagement elements 70 facilitates torque transmission between the first member 30 and the second member 32.

The second member second end 64 is connected to a constant velocity joint assembly 80. The constant velocity joint assembly 80 includes a constant velocity joint 82 and a joint assembly 84. The constant velocity joint 82 includes an outer member 86 that extends towards the shaft assembly 20. The outer member 86 is configured to receive at least a portion of the joint assembly 84. The joint assembly 84 includes a plurality of rolling elements or torque transmitting elements that are disposed between the outer member 86 and the second member 32. At least one of the first member 30 and the second member 32 is retained by the constant velocity joint 82 by the joint assembly 84.

The bushing assembly 22 is configured as a compliant torsional bushing. The bushing assembly 22 is arranged to allow for relative rotational motion of the shaft assembly 20 while maintaining sealing integrity of the variable stiffness joint assembly 10. The bushing assembly 22 is disposed about the first member 30 of the shaft assembly 20. The bushing assembly 22 is disposed between the first outer surface 40 of the first member 30 and the sealing boot 24.

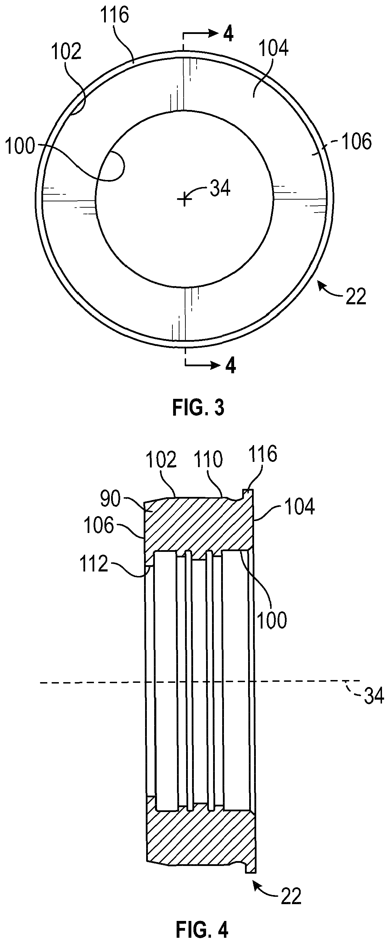

Referring to FIGS. 3-11, the bushing assembly 22 includes a bushing body 90. The bushing body 90 is made of one or more compliant materials that allows for elastic deformation. The elastic deformation of the bushing body 92 enables the bushing body 92 to deflect in torsion. The bushing body 90 may be made of a composite material having non-linear stiffness characteristics. The bushing body 90 extends radially between an inner bushing surface 100 and an outer bushing surface 102. The bushing body 90 extends axially between a first bushing face 104 and a second bushing face 106 along a bushing axis.

The inner bushing surface 100 is disposed about the first outer surface 40 of the first member 30. The inner bushing surface 100 defines a first protrusion 110. The first protrusion 110 may be provided as part of a plurality of ridges that extends between the first bushing face 104 and the second bushing face 106. The plurality of ridges are arranged to retain a lubricant, such as grease, against the first outer surface 40. The plurality of ridges are arranged to aid in retaining a lubricant within the variable stiffness joint assembly 10.

The outer bushing surface 102 is configured to engage the sealing boot 24. The outer bushing surface 102 defines a second protrusion 112. The second protrusion 112 may be provided as part of another plurality of ridges that extend between the first bushing face 104 and the second bushing face 106. Another plurality of ridges are arranged to aid in retaining the sealing boot 24 against the bushing assembly 22.

The first bushing face 104 extends radially between a first end of the inner bushing surface 100 and a first end of the outer bushing surface 102.

The second bushing face 106 is disposed opposite the first bushing face 104. The second bushing face 106 extends radially between a second end of the inner bushing surface 100 and a second end of the outer bushing surface 102.

The bushing assembly 22 also includes a boot stop 116. The boot stop 116 extends away from the bushing body 90. The boot stop 116 is disposed substantially perpendicular to the outer bushing surface 102. The boot stop 116 is disposed proximate the first bushing face 104. The boot stop 116 is arranged to axially seat the sealing boot 24 on the bushing assembly 22.

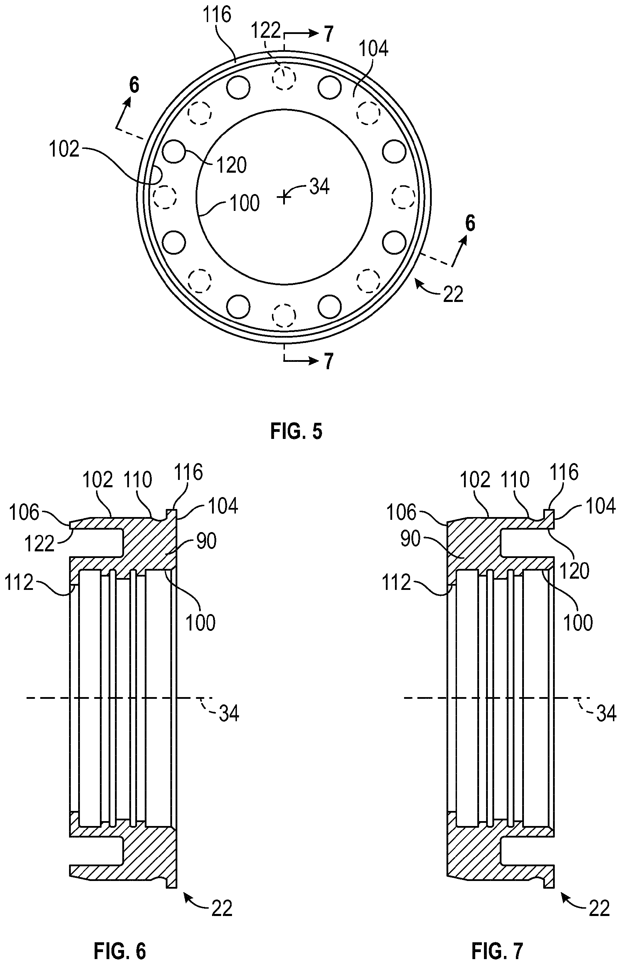

Referring to FIGS. 5-7, the bushing body 90 of the bushing assembly 22 includes a first cavity 120 and the second cavity 122. The first cavity 120 extends from the first bushing face 104 towards the second bushing face 106. The first cavity 120 extends towards, but not through, the second bushing face 106 of the bushing body 90. The second cavity 122 extends from the second bushing face 106 towards the first bushing face 104. The second cavity 122 extends towards, but not through, the first bushing face 104 of the bushing body 90.

As shown in FIGS. 5-7, the first cavity 120 may be radially offset from the second cavity 122. The first cavity 120 and the second cavity 122 alternate in a manner such that the first cavity 120 and the second cavity 122 are not axially aligned.

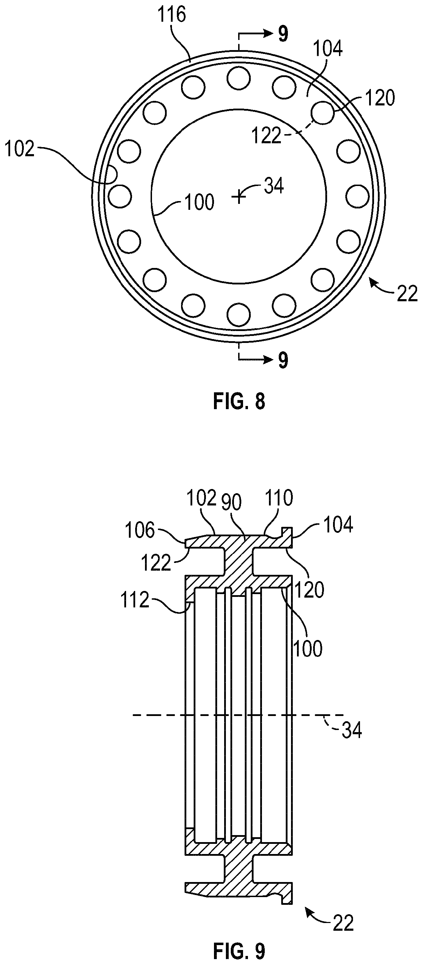

As shown in FIGS. 8 and 9, the first cavity 120 may be axially and/or radially aligned with the second cavity 124 along an axis that is disposed substantially parallel to the axis 34 and/or disposed about the bushing axis of the bushing body 90. As arranged, the first cavity 120 extends towards the second cavity 122. The first cavity 120 and the second cavity 122 are separated from each other by a portion of the bushing body 90 that is disposed between opposing ends of each cavity.

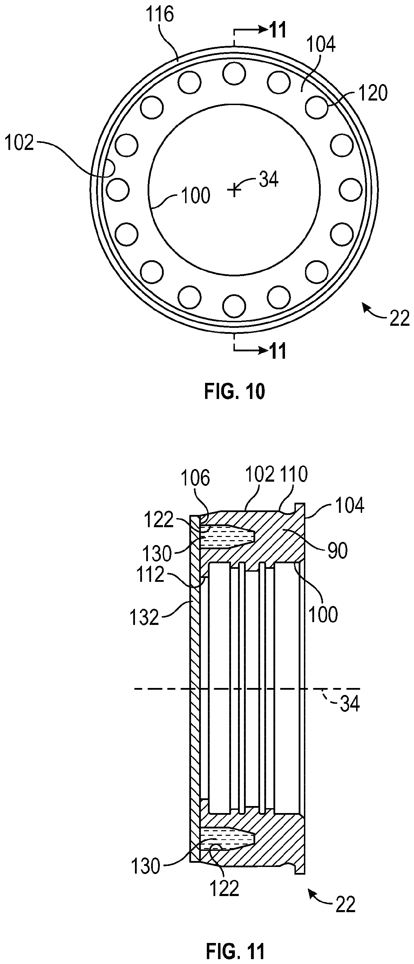

Referring to FIGS. 10 and 11, at least one of the first cavity 120 and the second cavity 122 may be provided with a fluid 130. The fluid 130 may be an incompressible fluid that enables the bushing body 90 of the bushing assembly 22 to be more robust or resistant to compressive forces. According to the invention, the bushing assembly 22 further includes a sealing member 132. The sealing member 132 is disposed on the second bushing face 106 to seal the second cavity 122 to retain the fluid 130 within the second cavity 122. The sealing member 132 may be adhered to the second bushing face 106 by an adhesive, a fastener, or the like. The sealing member 132 may be additionally disposed on the first bushing face 104 to seal the first cavity 120 and retain the fluid 130 within the first cavity 120. The sealing member 132 may be adhered to the first bushing face 104 by an adhesive, a fastener, or the like.

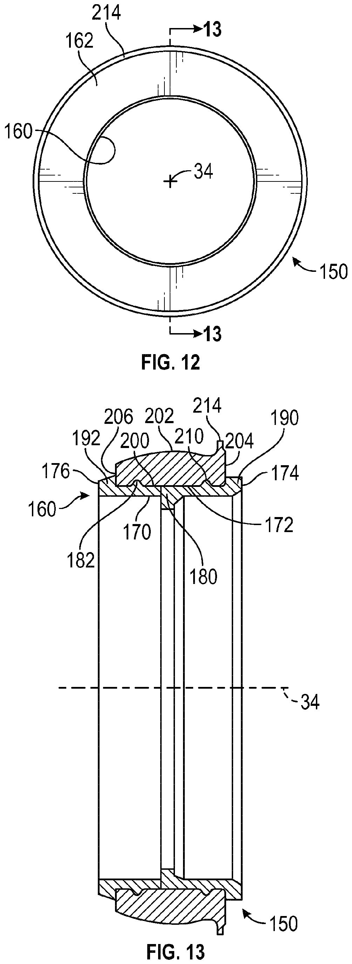

Referring to FIGS. 12 and 13, an alternative bushing assembly 150 is shown, which is not part of the present invention. The alternative bushing assembly 150 is configured as a rotary, torsional bushing assembly. The alternative bushing assembly 150 includes a first bushing member 160 and a second bushing member 162. The first bushing member 160 is configured to rotate relative to the second bushing member 162.

The first bushing member 160 is configured as an inner race. The first bushing member 160 includes a first inner surface 170 and a first outer surface 172 that is disposed opposite the first inner surface 170. The first inner surface 170 and the first outer surface 172 each extend between a first bushing member first end 174 and a first bushing member second end 176.

The first inner surface 170 is configured to engage the first outer surface 40 of the first member 30 of the shaft assembly 20. The first inner surface 170 defines a first protrusion 180. The first protrusion 180 extends towards the shaft assembly 20. The first protrusion 180 may be provided as part of a plurality of ridges that extend between the first bushing member first end 174 and the first bushing member second end 176. The plurality of ridges are arranged to retain a lubricant, such as grease, against the first outer surface 40. The plurality of ridges are arranged to aid in retaining a lubricant within the variable stiffness joint assembly 10.

The first outer surface 172 is spaced apart from the first inner surface 170. The first outer surface 172 defines a second protrusion 182. The second protrusion 182 extends towards the second bushing member 162. In at least one embodiment, the second protrusion 182 extends into the second bushing member 162.

The first outer surface 172 defines a first retention arm 190 and the second retention arm 192. The first retention arm 190 is disposed proximate the first bushing member first end 174 and is disposed substantially perpendicular to the first outer surface 172. The second retention arm 192 is disposed proximate the first bushing member second end 176 and is disposed substantially perpendicular to the first outer surface 172.

The second bushing member 162 is disposed about the first bushing member 160. The second bushing member 162 is disposed between the first retention arm 190 and the second retention arm 192. The second bushing member 162 includes a second inner surface 200 and a second outer surface 202 that is disposed opposite the second inner surface 200. The second inner surface 200 and the second outer surface 202 each extend between a second bushing member first end 204 and a second bushing member second end 206.

The second inner surface 200 is configured to engage the first outer surface 172 of the first bushing member 160. The second inner surface 200 defines a receiving groove 210 that is configured to receive the first protrusion 180.

The second outer surface 202 is configured to engage the sealing boot 24.

The second bushing member 162 defines a boot stop 214. The boot stop 214 extends away from the second outer surface 202 and is disposed substantially perpendicular to the second outer surface 202. The boot stop 214 is disposed proximate the second bushing member first end 204. The boot stop 214 is arranged to axially seat the sealing boot 24 on the alternative bushing assembly 150.

The sealing boot 24 extends between the bushing assembly 22 and the constant velocity joint assembly 80. The sealing boot 24 includes a convoluted portion 220 that extends between a first boot end 222 and a second boot end 224.

The first boot end 222 is operatively connected to the bushing assembly 22 by a first clamp 230 that is disposed about the first boot end 222. The first boot end 222 is at least partially disposed over or disposed on the outer bushing surface 102 of the bushing assembly 22. The second protrusion 112 of the outer bushing surface 102 engages the first boot end 222. The first boot end 222 is at least partially disposed over or disposed on the second outer surface 202 of the alternative bushing assembly 150. The first boot end 222 is configured to engage the boot stop 116 of the bushing assembly 22. The first boot end 222 is configured to engage the boot stop 214 of the alternative bushing assembly 150.

The second boot end 224 is operatively connected to the constant velocity joint assembly 80 by a second clamp 232 that is disposed about the second boot end 224. The second boot end 224 is at least partially disposed over or disposed on the outer member 86 of the constant velocity joint 82 of the constant velocity joint assembly 80.

Throughout this specification, the term "attach," "attachment," "connected," "coupled," "coupling," "mount," or "mounting" shall be interpreted to mean that a structural component or element is in some manner connected to or contacts another element, either directly or indirectly through at least one intervening structural element, or is integrally formed with the other structural element.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description.

## Claims

1. A variable stiffness joint assembly (10), comprising:
a first member (30) extending along an axis (34), the first member (30) having a first outer surface (40) and a first inner surface (42) extending between a first member first end (44) and a first member second end (46);
a second member (32) extending along the axis (34) and at least partially received within the first member (30), the second member (32) having a second outer surface (60) extending between a second member first end (62) and a second member second end (64) that is operatively connected to a constant velocity joint assembly (80); and
a bushing assembly (22) disposed about the first member (30), the bushing assembly (22) comprising:
a bushing body (90) extending radially between an inner bushing surface (100) and an outer bushing surface (102) and extending axially between a first bushing face (104) and a second bushing face (106), the inner bushing surface (100) being disposed about the first outer surface (40),
**characterized in that**
the bushing body (90) defines a first cavity (120) that extends from the first bushing face (104) towards the second bushing face (106),
wherein the bushing body (90) defines a second cavity (122) that extends from the second bushing face (106) towards the first bushing face (104),
wherein the bushing assembly (22) further comprises a sealing member (132) disposed over the second cavity (122).

2. The variable stiffness joint assembly (10) of claim 1, wherein the first inner surface (42) defines a plurality of first engagement elements (50) and the second outer surface (60) defines a plurality of second engagement elements (70) that are arranged to selectively engage the plurality of first engagement elements (50).

3. The variable stiffness joint assembly (10) of claim 1, further comprising:
a sealing boot (24) having a first boot end (222) operatively connected to the bushing assembly (22) and a second boot end (224) operatively connected to the constant velocity joint assembly (80).

4. The variable stiffness joint assembly (10) of claim 3, further comprising:
a clamp (230) disposed about the first boot end (222) and is arranged to secure the sealing boot (24) to the bushing assembly (22).

5. The variable stiffness joint assembly (10) of claim 1, wherein the first cavity (120) is radially offset from the second cavity (122).

6. The variable stiffness joint assembly (10) of claim 1, wherein the first cavity (120) is aligned with the second cavity (122) radially along another axis that is disposed about a bushing axis (34) of the bushing body (90).

7. The variable stiffness joint assembly (10) of claim 1, wherein at least one of the first cavity (120) and the second cavity (122) is filled with a fluid (130).

8. The variable stiffness joint assembly (10) of claim 3, further comprising a boot stop (214) extending from the outer bushing surface (202) of the bushing body (90).

9. The variable stiffness joint assembly (10) of claim 8, wherein the boot stop (214) is configured to engage an end (222) of the sealing boot (24).

10. The variable stiffness joint assembly (10) of claim 8, wherein the inner bushing surface (170) defines a first protrusion (180) that extends towards at least one of the first member (160) or the second member (162).

11. The variable stiffness joint assembly (10) of claim 10, wherein the outer bushing surface (172) defines a second protrusion (182) that engages the sealing boot (24).

## Patentansprüche

1. Gelenkanordnung (10) mit variabler Steifigkeit, umfassend:
ein erstes Element (30), das sich entlang einer Achse (34) erstreckt, wobei das erste Element (30) eine erste Außenfläche (40) und eine erste Innenfläche (42) aufweist, die sich zwischen einem ersten Ende (44) des ersten Elements und einem zweiten Ende (46) des ersten Elements erstrecken;
ein zweites Element (32), das sich entlang der Achse (34) erstreckt und zumindest teilweise in dem ersten Element (30) aufgenommen ist, wobei das zweite Element (32) eine zweite Außenfläche (60) aufweist, die sich zwischen einem ersten Ende (62) des zweiten Elements und einem zweiten Ende (64) des zweiten Elements erstreckt, das mit einer Gleichlaufgelenkanordnung (80) wirksam verbunden ist; und
eine Buchsenanordnung (22), die um das erste Element (30) herum angeordnet ist, wobei die Buchsenanordnung (22) umfasst:
einen Buchsenkörper (90), der sich radial zwischen einer Buchseninnenfläche (100) und einer Buchsenaußenfläche (102) erstreckt und sich axial zwischen einer ersten Buchsenseite (104) und einer zweiten Buchsenseite (106) erstreckt, wobei die Buchseninnenfläche (100) um die erste Außenfläche (40) herum angeordnet ist,
**dadurch gekennzeichnet, dass**
der Buchsenkörper (90) einen ersten Hohlraum (120) definiert, der sich von der ersten Buchsenseite (104) aus zu der zweiten Buchsenseite (106) hin erstreckt,
wobei der Buchsenkörper (90) einen zweiten Hohlraum (122) definiert, der sich von der zweiten Buchsenseite (106) aus zu der ersten Buchsenseite (104) hin erstreckt,
wobei die Buchsenanordnung (22) ferner ein Dichtungselement (132) umfasst, das über dem zweiten Hohlraum (122) angeordnet ist.

2. Gelenkanordnung (10) mit variabler Steifigkeit nach Anspruch 1, wobei die erste Innenfläche (42) eine Vielzahl von ersten Eingriffselementen (50) definiert und die zweite Außenfläche (60) eine Vielzahl von zweiten Eingriffselementen (70) definiert, die eingerichtet sind, um selektiv in die Vielzahl von ersten Eingriffselementen (50) einzugreifen.

3. Gelenkanordnung (10) mit variabler Steifigkeit nach Anspruch 1, ferner umfassend:
eine Dichtmanschette (24) mit einem ersten Manschettenende (222), das mit der Buchsenanordnung (22) wirksam verbunden ist, und einem zweiten Manschettenende (224), das mit der Gleichlaufgelenkanordnung (80) wirksam verbunden ist.

4. Gelenkanordnung (10) mit variabler Steifigkeit nach Anspruch 3, ferner umfassend:
eine Klemme (230), die um das erste Manschettenende (222) herum angeordnet ist und eingerichtet ist, um die Dichtmanschette (24) an der Buchsenanordnung (22) zu befestigen.

5. Gelenkanordnung (10) mit variabler Steifigkeit nach Anspruch 1, wobei der erste Hohlraum (120) gegenüber dem zweiten Hohlraum (122) radial versetzt ist.

6. Gelenkanordnung (10) mit variabler Steifigkeit nach Anspruch 1, wobei der erste Hohlraum (120) mit dem zweiten Hohlraum (122) radial entlang einer anderen Achse ausgerichtet ist, die um eine Buchsenachse (34) des Buchsenkörpers (90) angeordnet ist.

7. Gelenkanordnung (10) mit variabler Steifigkeit nach Anspruch 1, wobei der erste Hohlraum (120) und/oder der zweite Hohlraum (122) mit einem Fluid (130) gefüllt ist/sind.

8. Gelenkanordnung (10) mit variabler Steifigkeit nach Anspruch 3, ferner umfassend einen Manschettenanschlag (214), der sich von der Buchsenaußenfläche (202) des Buchsenkörpers (90) aus erstreckt.

9. Gelenkanordnung (10) mit variabler Steifigkeit nach Anspruch 8, wobei der Manschettenanschlag (214) konfiguriert ist, um in ein Ende (222) der Dichtmanschette (24) einzugreifen.

10. Gelenkanordnung (10) mit variabler Steifigkeit nach Anspruch 8, wobei die Buchseninnenfläche (170) einen ersten Vorsprung (180) definiert, der sich zu dem ersten Element (160) und/oder dem zweiten Element (162) hin erstreckt.

11. Gelenkanordnung (10) mit variabler Steifigkeit nach Anspruch 10, wobei die Buchsenaußenfläche (172) einen zweiten Vorsprung (182) definiert, der in die Dichtmanschette (24) eingreift.

## Revendications

1. Ensemble formant joint à raideur variable (10), comprenant :
un premier élément (30) s'étendant le long d'un axe (34), le premier élément (30) ayant une première surface extérieure (40) et une première surface intérieure (42) s'étendant entre une première extrémité (44) du premier élément et une seconde extrémité (46) du premier élément ;
un second élément (32) s'étendant le long de l'axe (34) et au moins partiellement reçu à l'intérieur du premier élément (30), le second élément (32) ayant une seconde surface extérieure (60) s'étendant entre une première extrémité (62) du second élément et une seconde extrémité (64) du second élément, qui est fonctionnellement connectée à un ensemble formant joint homocinétique (80) ; et
un assemblage à douille (22) disposé autour du premier élément (30), l'assemblage à douille (22) comprenant :
un corps de douille (90) s'étendant radialement entre une surface de douille intérieure (100) et une surface de douille extérieure (102) et s'étendant axialement entre une première face de douille (104) et une seconde face de douille (106), la surface de douille intérieure (100) étant disposée autour de la première surface extérieure (40),
**caractérisé en ce que**
le corps de douille (90) définit une première cavité (120) qui s'étend à partir de la première face de douille (104) en direction de la seconde face de douille (106),
dans lequel le corps de douille (90) définit une seconde cavité (122) qui s'étend depuis la seconde face de douille (106) vers la première face de douille (104),
dans lequel l'assemblage à douille (22) comprend en outre un élément d'étanchement (132) disposé au-dessus de la seconde cavité (122).

2. Ensemble formant joint à raideur variable (10) selon la revendication 1, dans lequel la première surface intérieure (42) définit une pluralité de premiers éléments d'engagement (50) et la seconde surface extérieure (60) définit une pluralité de seconds éléments d'engagement (70) qui sont agencés de manière à engager sélectivement la pluralité de premiers éléments d'engagement (50).

3. Ensemble formant joint à raideur variable (10) selon la revendication 1, comprenant en outre :
un soufflet d'étanchéité (24) ayant une première extrémité de soufflet (222) fonctionnellement connectée à l'assemblage à douille (22) et une seconde extrémité de soufflet (224) fonctionnellement connectée à l'ensemble formant joint homocinétique (80).

4. Ensemble formant joint à raideur variable (10) selon la revendication 3, comprenant en outre :
une pince (230) disposée autour de la première extrémité de soufflet (222) et agencée de manière à bloquer le soufflet d'étanchéité (24) sur l'assemblage à douille (22).

5. Ensemble formant joint à raideur variable (10) selon la revendication 1, dans lequel la première cavité (120) est décalée radialement par rapport à la seconde cavité (122).

6. Ensemble formant joint à raideur variable (10) selon la revendication 1, dans lequel la première cavité (120) est alignée avec la seconde cavité (122) radialement le long d'un autre axe qui est disposé autour d'un axe (34) du corps de douille (90).

7. Ensemble formant joint à raideur variable (10) selon la revendication 1, dans lequel l'une au moins de la première cavité (120) et de la seconde cavité (122) est remplie avec un fluide (130).

8. Ensemble formant joint à raideur variable (10) selon la revendication 3, comprenant en outre un arrêt pour soufflet (214) s'étendant depuis la surface de douille extérieure (202) du corps de douille (90).

9. Ensemble formant joint à raideur variable (10) selon la revendication 8, dans lequel l'arrêt pour soufflet (214) est configuré pour engager une extrémité (222) du soufflet étanchéité (24).

10. Ensemble formant joint à raideur variable (10) selon la revendication 8, dans lequel la surface de douille intérieure (170) définit une première projection (180) qui s'étend vers l'un au moins parmi le premier élément (160) ou le second élément (162).

11. Ensemble formant joint à raideur variable (10) selon la revendication 10, dans lequel la surface de douille extérieure (172) définit une seconde projection (182) qui engage le soufflet d'étanchéité (24).
